# EUROPEAN PATENT APPLICATION

(11) **EP 0 984 514 A2**
(43) Date of publication of application: **08.03.2000**
(21) Application number: 99307043.2
(22) Date of filing: 03.09.1999
(51) Int. Cl.: H01R 9/24, H04B 3/54

(54) **Signal connection device for a power line telecommunication system**

(30) Priority: 03.09.1998 GB 9819239; 15.04.1999 GB 9908654
(71) Applicant: Nor.Web DPL Limited, Slough SL1 4DX (GB)
(72) Inventor: Dickinson, John, Burnley, Lancashire BB11 3PR (GB); Gillett, John Heath, Mellor, Blackburn BB2 5RU (GB); Rawlinson, Jonathan Peter, Crosby, Liverpool L23 5RU (GB)
(74) Representative: Hackney, Nigel John

(57) **Abstract**

An access cover for a consumer cutout of an electricity network is disclosed. The cover includes a connector suitable for making an electrical connection with a conductor within the cutout to carry signals from that conductor to a signal processing circuit.

Preferably, the cover is an insulating cover plate shaped and dimensioned to fit a company fuse base, apertured to admit connecting prongs of a mating fuse holder, and further supporting a communications connecting point and a circuit providing a high-frequency signal path from a terminal block of the fuse base to one pole of the communications connecting point but no low-frequency connection between those points and connecting the other pole of the communications connecting point to an earth and/or neutral terminal block present in the fuse base.

## Description

The present invention relates to a signal connection device for a power line telecommunication system.

Various published patent applications of the present applicant are described in International applications WO 94/09572, WO95/29536, WO95/29537, WO96/07245, W098/19318 which disclose systems whereby a telecommunication signal can be conveyed into a consumer's premises carried on a supply cable for mains electricity. Once inside the premises, a connection must be made to the supply cable to enable extraction of the telecommunication signal from the supply cable. A connection between a trunk data network and an electrical supply cable may also be made at some point, for example within a substation.

There are clear advantages in minimising the amount of work which must be carried out on mains conductors during installation of a power line telecommunication system in a consumer's premises or at a substation. To ensure safety, any such work can be carried out only by a suitably qualified person, and this requirement adds to the cost of the installation. It is also clearly desirable that the level of disruption caused by installation of a power line telecommunication system is minimised, most preferably to the extent that the supply of mains electricity to the premises need not be interrupted.

In a co-pending application, the present applicant has disclosed and claimed a signal connection device by means of which a connection can be made at a mains power fuse, with particular reference being made to a cylindrical cartridge type fuse commonly used in various countries including Sweden and Germany. An aim of the present invention is to provide a corresponding system which is especially suited for use with consumer cut-out fuses as typically used in the United Kingdom and in other countries with similar electrical installation practices.

Such networks enter the consumer's premises, usually by an underground cable (in a flat (or apartment) block, by an indoor riser cable or in some rural areas by a drop-wire cable from an overhead supply line) and pass immediately to a cartridge fuse unit, usually referred to as the "company fuse" which is normally the property of the local electricity supply utility, and then to a meter, which under present competitive supply arrangements may belong to a different electricity supplier.

The present invention, in a first of its aspects, provides an access cover for a consumer cut-out which cover includes a connector suitable for making an electrical connection with a conductor within the cut-out to carry signals from that conductor to a signal processing circuit.

Locating such a connector within a cover of a consumer cut-out has many advantages, not least in that it is a piece of apparatus which is routinely accessed for maintenance and in that connection to mains supply conductors can be made without disconnecting or modifying the conductors.

This also has the advantage of avoiding trying to make communications connections downstream of the meter, which is difficult because it has enough inductance to attenuate high-frequency signals substantially, and technical and ownership complications make it unattractive to incorporate coupling devices inside the meter.

A very large proportion of the installations that have been made or renewed in the United Kingdom in the last 25 years has a company fuse unit incorporating either separate earth and neutral connector blocks or a single connector block combining both neutral and earth functions (for "PME" installations); practically all these units are selected from only three standard models of respective suppliers (BICC, GEC and Lucy) - in each case substantially the same mouldings are used whether the neutral and earth blocks are combined or separate - and the present invention exploits this to provide connection devices that can be inserted into those installations without requiring any particular layout or occupying any significant space and in a few minutes.

Preferably, the cover is an insulating cover plate shaped and dimensioned to fit a company fuse base, apertured to admit connecting prongs of a mating fuse holder, and further supporting a communications connecting point and a circuit providing a high-frequency signal path from a terminal block of the fuse base to one pole of the communications connecting point but no low-frequency connection between those points and connecting the other pole of the communications connecting point to an earth and/or neutral terminal block present in the fuse base.

Contact will typically be made with an uninsulated conductor within the cut-out, for example, such as a terminal block, or a component which connects with the fuse holder.

In most embodiments, the cover includes two connectors each of which is suitable for making a connection to a respective conductor within the cut-out.

For most purposes, in a preferred embodiment, at least one of the connectors is arranged to make contact with a conductor automatically and without direct intervention of an installer upon application of the access cover to a base unit. This may, for example, be achieved through the provision of a connection element which comes into contact with a conductor upon application of the access cover. Such a connection element may be provided in combination with resilient biasing means which cause the connection element to be urged into contact with the conductor. In a preferred embodiment, the connection element includes an elongate metal contact pin, a shaft portion of which carries a helical spring which constitutes the resilient biasing means.

Preferably the connections to the respective terminal blocks are made by spring-loaded contacts bearing on them so that contact is made simply by screwing or otherwise securing the device in place of the existing cover plate; a preferred form of spring-loaded contact is described below. The spring loaded contact alone may also form a further aspect of the invention, independently of the cover.

In a further aspect, the invention an insulating cover plate shaped and dimensioned to fit a company fuse base, apertured to admit connecting prongs of a mating fuse holder, and further supporting a communications connecting point and a circuit and connecting means providing a high-frequency signal path from a terminal block of the fuse base to one pole of the communications connecting point but no low-frequency connection between those points and connecting the other pole of the communications connecting point to an earth and/or neutral terminal block present in the fuse base is distinguished by the fact that the said connecting means comprise spring-loaded terminals for engagement with respective terminal blocks, the contact-making ends of which are sharply pointed.

Preferably, the ends may be taken to be sharply pointed if they have a radius less than 0.1mm.

Typically, the signal processing circuit (or a part of a signal processing circuit) is provided on or in the access cover. In such embodiments, the cover for preference carries a signal connector to which a connection can be made during such time as the access cover is located for use on a consumer cut-out.

Alternative circuits for providing the required signal path and mains-frequency isolation are available, some of which are discussed in the applications identified above. Our present preference is for a circuit comprising a capacitor in series with the primary side of a ferrite-cored high-frequency isolating transformer between the fuse terminal block and earth, the secondary side of the transformer being connected between the communications connecting point and earth.

To maximise electrical safety we prefer to
(a) use a metallised capacitor of the kind (sometimes called self-healing) in which any electrical breakdown leads to evaporation of the metallising in the vicinity and if breakdown continues to open-circuit failure;
(b) use a transformer of the kind in which primary and secondary windings are physically separated by a sufficient distance to be confident no electrical connection can accidentally arise between them;
(c) to connect a fuse in series with the primary circuit; and
(d) to connect the primary and secondary sides to the earth terminal block independently of each other.

If all these precautions are taken, supply voltage can only appear on the communications connecting point if the capacitor fails, contrary to its design, in short circuit *and* the fuse fails to operate *and* the earth connections both fail *and* become connected to each other.

Any or all of precautions (a)-(d) may form further aspects of the invention, independently of the other aspects.

A preferred circuit for providing the required signal path and mains-frequency isolation comprises a capacitor in series with the primary side of a ferrite-cored high-frequency isolating transformer between the fuse terminal block and earth, the secondary side of the transformer being connected between the communications connecting point and earth.

In accordance with a further aspect of the present invention, the primary and secondary sides of the isolating transformer are connected to the earth (or combined neutral and earth) terminal block of the fuse base independently of each other as an additional precaution against the risk of mains voltage appearing on the communications connecting point.

Preferably the device includes a blanking plate which can be secured in position (for example by using a security wire as routinely used to secure the company fuse holder in place) to block access to the communications connecting point, and this may serve (in a different orientation) to secure a mating connecting device for a communication lead.

It will be apparent that in practice it is likely that the installer needs to bring to site three models of the device in accordance with the invention, one for each of the models of company fuse to be expected. Installation then consists of no more than removing the security wire, unplugging the fuse carrier, unscrewing and discarding the cover plate to the fuse base and screwing the appropriate device in accordance with the invention in its place, replacing the fuse carrier and the security wire: this is estimated to take about 5 minutes.

In the event that the installation does not incorporate one of the expected designs of company fuse, then a replacement fuse base will be needed and this will take extra time, but this will arise relatively infrequently and ordinarily only in old installations and will constitute a desirable modernisation.

In a second of its aspects, the invention provides a consumer cut-out having an access cover which embodies the first aspect of the invention.

Such a cut-out may be included in a new electrical installation, or in an existing installation where a consumer cut-out is to be replaced.

From a third aspect, the invention provides a method of making a telecommunication signal connection to a mains power supply wherein an access cover is removed from a consumer cut-out and is substituted by an access cover embodying the first aspect of the invention.

Embodiments of the invention will now be described in detail, by way of example, and with reference to the accompanying drawings, in which:

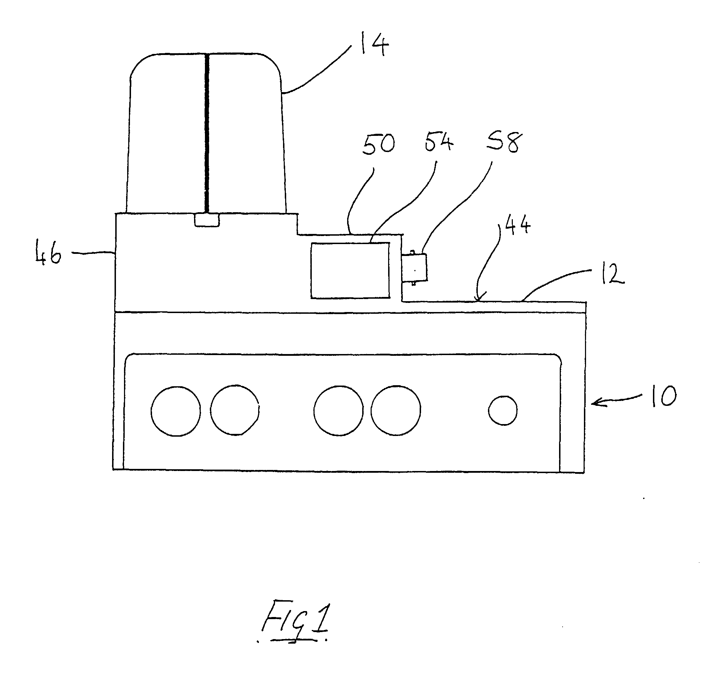

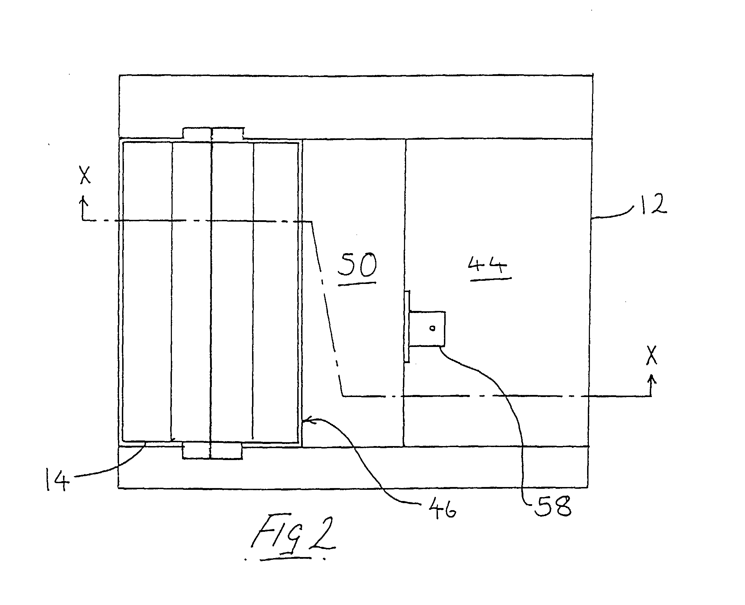

Figure 1 is a plan view of signal connection apparatus embodying the invention;

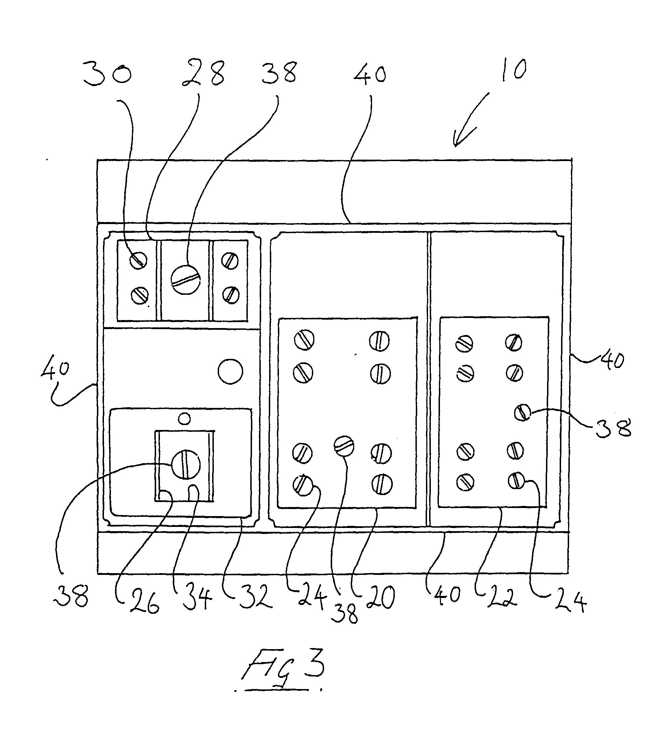

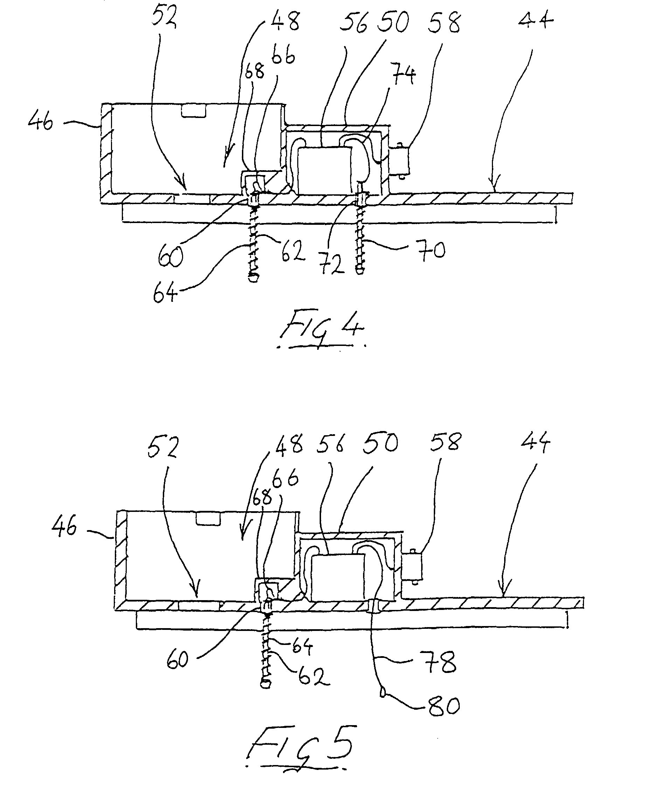

Figure 2 is a view from the front of the apparatus of Figure 1;
Figure 3 is a front view of the apparatus of Figures 1 and 2 from which an access cover has been removed;
Figure 4 is a section along the line X-X of figure 2;
Figure 5 is a section along the line X-X of figure 2 showing a modification to the apparatus;
Figure 6 shows an electrical installation embodying various aspects of the invention; and
Figure 7 is a front view of a conventional company fuse base suitable for use with the present invention;
Figure 8 is a corresponding front view of one form of coupling device in accordance with the invention;
Figure 9 is a back (or inside) view of the device;
Figure 10 is an isometric view to clarify its shape;
Figure 11 shows one suitable circuit diagram for the device;
Figure 12 shows an accessory for use with it;
Figure 13 is an enlarged view of the device from below; and
Figures 14-17 are isometric views, corresponding to Figure 10, showing alternative designs for the device.

Within the United Kingdom, and in some other countries, mains electricity is fed into a consumer's premises to connect first with a consumer cut-out 2. The consumer cut-out is, essentially, a fuse with a rating selected to blow in the event of a major short-circuit failure or excessive current demand within the consumer's premises.

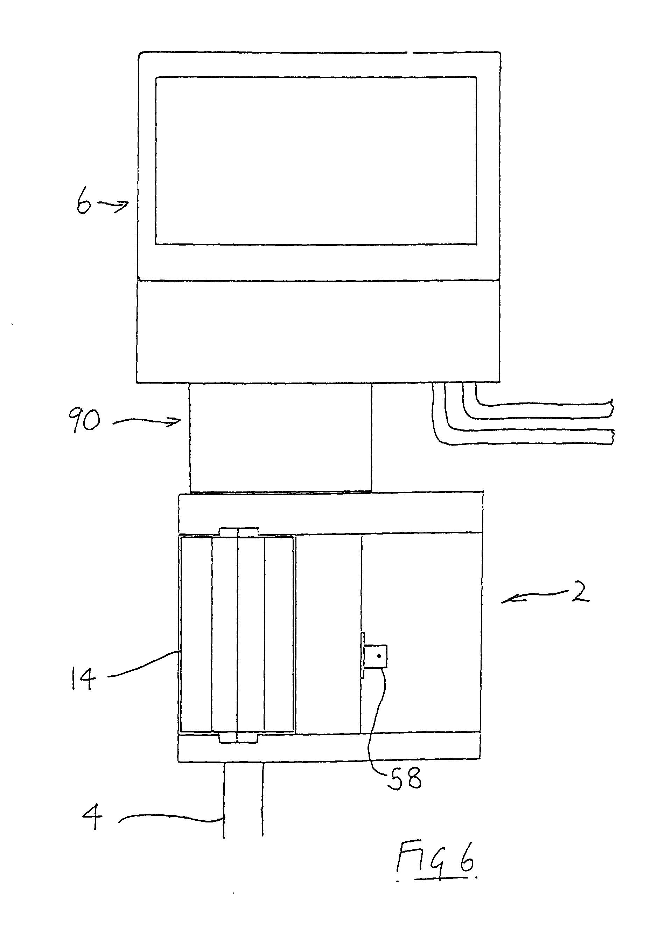

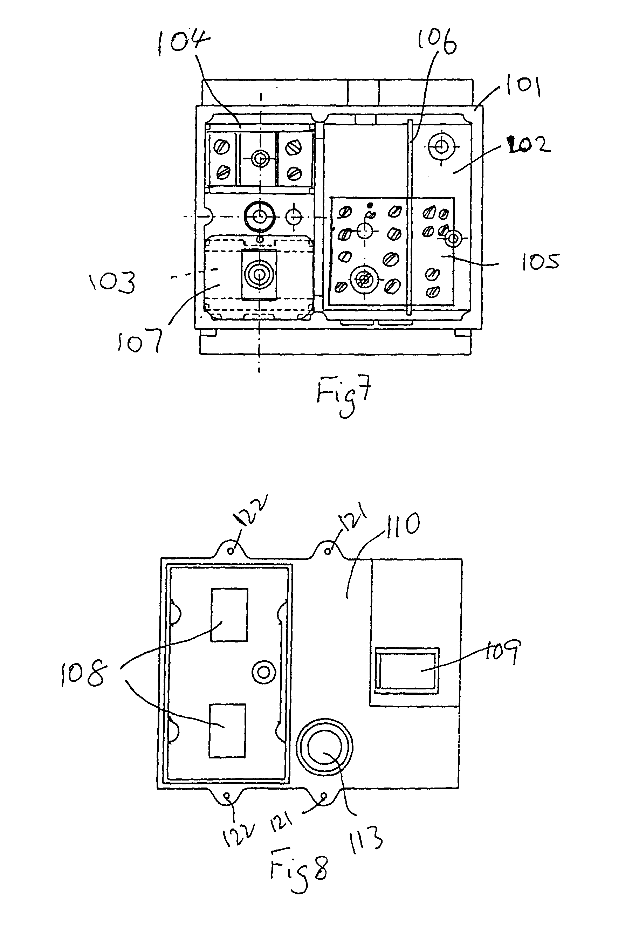

A typical consumer cut-out 2 comprises a base unit (as shown generally at 10 in Figure 3), an access cover 12, and a fuse holder 14.

The base unit 10 is typically formed as a moulding of insulating material such as a thermosetting polymer. Live, neutral and earth supply cables 4 of a mains supply enter the base unit 10 from below in the orientation shown in Figures 3 and 6 and live, neutral and earth feed (or live and combined neutral/earth) cables exit the base unit upwardly in the orientation shown in Figure 3 to connect with a meter 6 and a consumer unit (not shown).

The neutral and the earth cables are connected within respective metal terminal blocks 20,22 within which they are clamped by fixing screws 24. The terminal blocks 20,22 serve to connect each supply cable directly to the corresponding feed cable.

The live supply cable is connected to a first socket component 26, while the live feed cable is connected to a separate second socket component 28 within which sockets the cables are secured by fixing screws 30. Each of the socket components 26,28 is configured to receive a respective connection pin of the fuse holder 14 such that they are electrically interconnected through a fuse within the fuse holder 14. The first socket component 26 is partially covered by an insulating shield 32, the shield 32 having an aperture 34 though which a connection pin of the fuse holder 14 can pass.

The base unit 10 has a floor on which the terminal blocks 20,22 and the socket components 26,28 are secured by fixing screws 38, and peripheral walls 40 which surround the terminal blocks 20,22 and the socket components 26,28. In the absence of the access cover 12, the terminal blocks 20,22 and the socket components 26,28 are exposed in order that work can be carried out on them, typically on behalf of an electricity supply company.

It will be understood by those knowledgeable in the technical field that the above description of a base unit is entirely in accordance with a base unit of a conventional consumer cut-out.

The access cover 12 is typically formed as a moulding of insulating material such as a thermosetting polymer. The access cover 12 is shaped and dimentioned to be mountable on the peripheral walls 40 of the base unit to enclose the terminal blocks 20,22 and the socket components 26,28.

The access cover 12 includes a plane portion 44 which, when fitted to the base unit 10, lies over the earth terminal block 22. A wall portion 46 projects from the plane portion 44 to define a rectangular region 48 into which part of the fuse holder 14 can be received. Within the rectangular region 48 apertures 52 are formed through the access cover 12 in order that the pins of the fuse holder 14 can gain access to the socket components 26,28. The access cover 12 is held in place on the base unit 10 by means of a fixing screw, access to which is prevented while the fuse holder 14 is in place on the apparatus. The fuse holder of a consumer cut-out is normally sealed, such that the seal must be broken to enable the fuse holder 14 to be removed from the base unit, so that unauthorised removal of the fuse holder 14 or the access cover 12 is evident on subsequent inspection.

A housing 50 is formed in the access cover 12 adjacent to the wall portion 46. The housing 50 may be formed as a tubular void, end openings of which are closed by closure plates 54 inserted into them.

Within the housing 50 signal processing circuitry 56 is located. A communication signal connector 58 is mounted within a wall of the housing 50, and is electrically connected to the processing circuitry 56 such that communications signals can be conveyed through the connector 58 to and from the processing circuitry 56. The processing circuitry 56 typically includes a high-pass filter, and may for example be constructed in accordance with the description contained in published UK patent application No. 2272350.

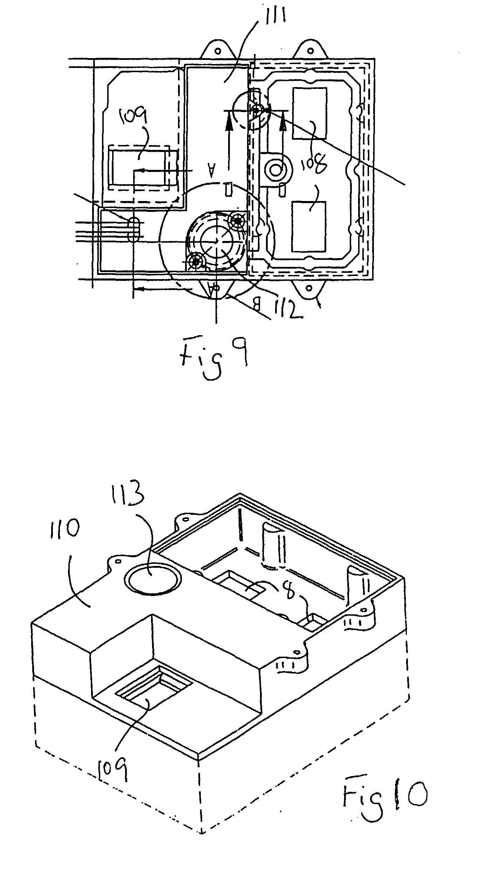

Clearly, the processing circuitry must also be connected to mains supply if communications signals are to be carried over mains power lines. The way in which this is achieved will now be described, first with particular reference to Figure 4.

A hole 60 is provided through the access cover 12 within the rectangular region 48. A contact pin 62 has an elongate cylindrical shaft and a bulbous or sharp pointed end portion An end part of the shaft remote from the bulbous end portion passes through the hole 60, a clip being applied to the contact pin 62 to prevent its removal from the hole 60, and a conducting wire 66 being secured to the contact pin 62. The shaft is surrounded by a helical spring 64, which is suitably sized as to be trapped in compression between the bulbous end portion and material of the access cover 12 surrounding the hole 60. The contact pin 62 is thus biased by the spring 64 to a position in which it projects from the access cover. The conducting wire 66 passes through apertures in the material of the access cover 12 to be connected to the signal processing circuitry 56.

The contact pin 62 is located such that it makes contact with an exposed metal part of the second socket component 28 as the access cover is located on the base unit 10, such that it is displaced a short distance against the force of the spring 64 when the access cover 12 is secured in place.

Within the rectangular region 48, a cover 68 may be provided to shield the end of the contact pin 62.

A second contact pin 70 and a third contact pijn (not shown) are provided, in a similar configuration, to make contact with the neutral terminal block 20 when the access cover 12 is secured in place. An end portion of the second and the third contact pin 70 extends through a hole 72 into the housing 50 where a conducting lead 74 connects it to the signal processing circuitry 56. Two contact pins connect with the neutral terminal block 20 to minimise the risk that a connection to neutral is lost. If this were to happen, protection of the signal output from mains voltage would be compromised.

As described above, the entire signal connection apparatus can be supplied as a complete unit. Very advantageously, an existing consumer cut-out can readily be adapted to constitute a signal connection device embodying the invention, as will be described.

In a conventional consumer cut-out, the seals are first broken and the fuse holder 14 is removed. The access cover 12 can then be removed. It should be noted that there are recognised procedures for carrying out this operation while the mains supply is live. An access cover as described with reference to Figure 4 is then located and secured in place on the base unit, whereupon the fuse holder 14 can be replaced and the seals re-applied. As will be appreciated, this entire operation is quick and routine, causes a minimum of disruption to a consumer's supply, and involves no modification to existing mains-voltage wiring.

With reference now to Figure 5, it is possible in a modification to the above-described embodiment to replace one or both of the contact pins 60,70 with a conducting lead 78. On the lead is provided an eyelet 80 or a similar connecting tag by means of which the lead can be secured to a screw of one of the terminal blocks 20,22 or to a socket component 28. This modification may be less costly to produce than that described above. It also increases the security of connection to the neutral terminal block, with consequnt safety benefits. However, its installation is considerably less straightforward, since at least one electrical connection must be made manually.

The above-described arrangements provide only for processing circuitry, typically including a high-pass filter, which can extract communication signals from and inject communication signals into a mains electricity supply. No provision is made for removing communication signals from the consumer's power supply. In many cases this may not be necessary, but in some cases it is a requirement.

An installation embodying the invention is shown in Figure 6. In addition to those components already described above, the installation comprises an anti-tamper block 90.

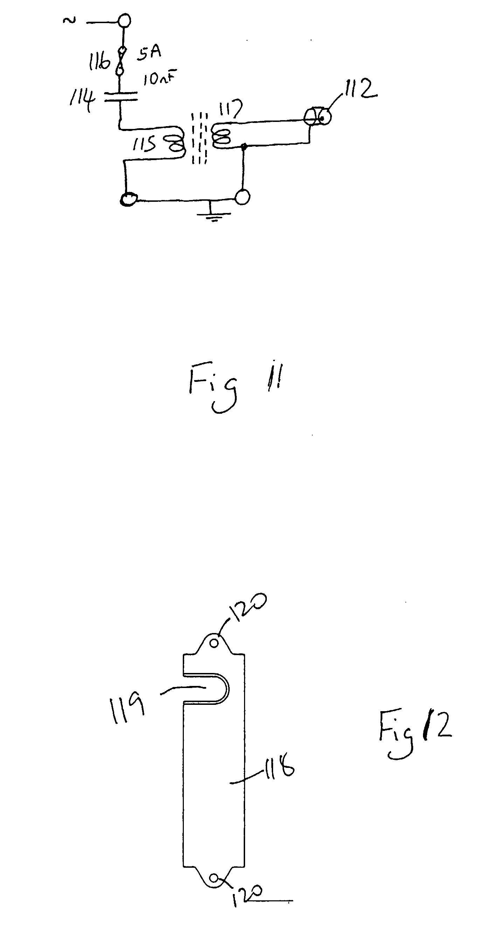

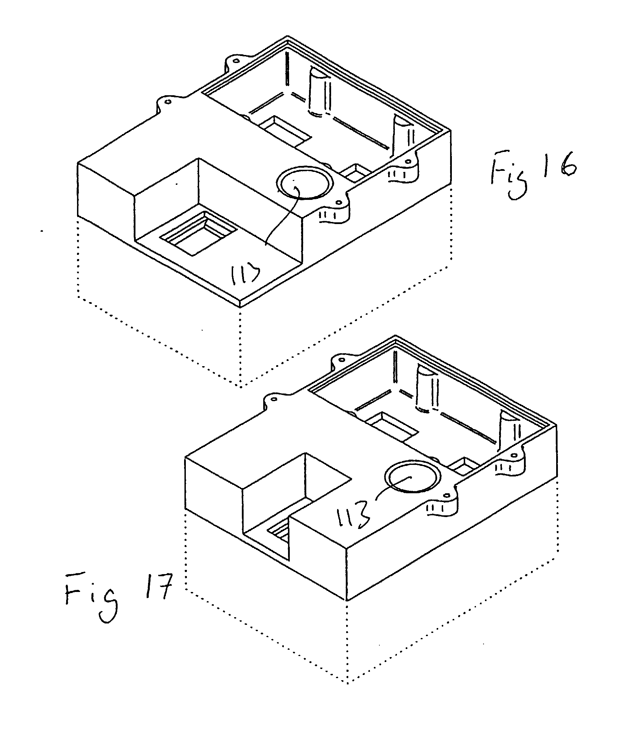

The fuse-base shown in Figure 7 is a BICC established design in its form for use in PME systems and comprises an insulating moulding 101 providing three compartments 102-104 separated by insulating partitions. Compartment 102 houses a combined neutral-and-earth terminal block 105 (or in the alternative form for non-PME systems it would be subdivided by an insulating partition inserted in a slot 106 and receive separate neutral and earth terminal blocks respectively to the left and right of the partition - the devices of figures 8-17 are equally suitable for use with that variant). Compartments 103 and 104 (the former concealed by an insulating protective shield 107) house respectively incoming and outgoing phase terminal blocks into which the fuse carrier will plug. In an existing installation, this fuse base will be enclosed by a cover providing a skirt around the fuse carrier and otherwise generally flat, with a pair of apertures for entry of the connecting prongs of the fuse carrier and another aperture (with a removable insulating plug) allowing access to the earth output end of the terminal block 105: turning to Figures 8-10, these apertures are present at 8 and 9 respectively in the device of the present invention. In addition, there is an L-shaped compartment 110 housing a circuit board 111 (Figure 10) mounting a communications connecting point in the form of a co-axial (BNC) socket 112 accessible through a further aperture 113 and other components.

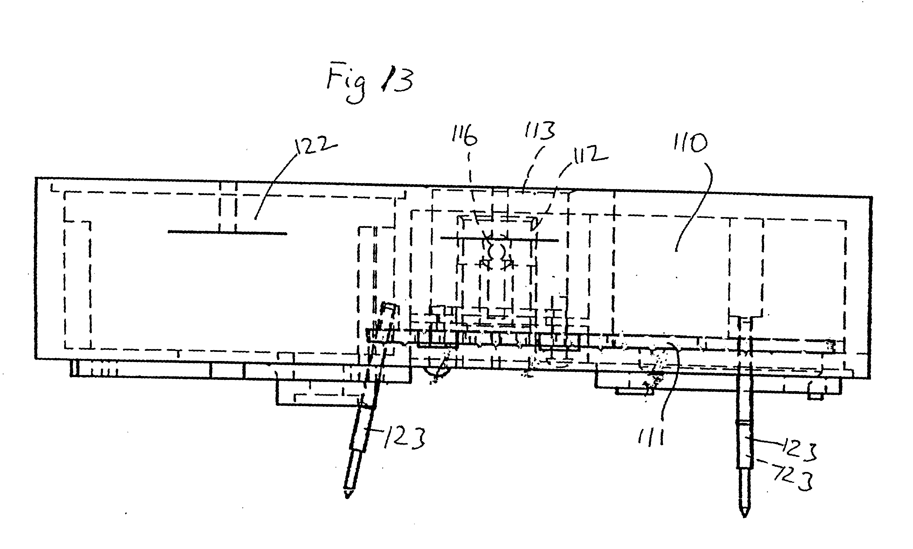

While various circuits may be successfully used, preferred circuit is shown in Figure 12 and comprises a "self-healing" capacitor 114 (10nF) connected in series with the primary 115 of a ferrite-cored transformer and a fuse 116 (1A continuous current rating) between the outgoing phase terminal and earth while the secondary 117 of the transformer is connected to both sides of the socket 112. The transformer has a ratio of 1:1 and its primary and secondary coils are wound on separate and well-spaced parts of its core.

Figure 12 shows a plate 118 that may be used as an accessory to the device of Figures 8-11 to prevent unauthorised access to the socket 112 (by laying it over the front of compartment 110 in the orientation shown) or to secure an inserted plug when use is authorised (by reversing it so that the slot 119 overlies the aperture 113), in either case securing it by wiring lugs 120 on the plate to aligned lugs 121 on the main device and applying a security seal to the wire, as is conventionally done with the fuse carrier using similar lugs 122.

While the connections to the phase and neutral/earth (or earth)terminal blocks could be made with appropriate lengths of jumper wire, at least in the many cases where a spare terminal is available in each block, it is preferable to avoid this separate step and make the connection by spring-loaded contacts simply bearing on the terminal block. We have found that ordinary smooth spring-loaded contacts like those used in bayonet lamp sockets may be improved on for this application (perhaps because the terminal blocks may be contaminated with oily materials, either as a manufacturing residue or from exposure to atmospheric pollution) but that sharp-pointed spring-loaded contacts give good and reliable results. The contacts 123 used in the illustrated example are readily available from Coda Systems Ltd (of Agricultural House, The Avenue, Braintree, Essex CM7 3HY) under the name "spear probes" and catalogue numbers PA3BX and RA3S for the spear and receptacle parts respectively: their usual application is in making temporary connections to electronic circuit boards for test purposes.

It should be noted that the probe contacting the phase connector block may preferably be inclined around 15° from normal to the face of the device and operates effectively at that angle, and that separate spear probes (one behind the other in the view of Figure 13) are used to connect the primary and secondary sides of the transformer to earth, so that if either probe were to fail, one side of the transformer would still be earthed.

As an additional protection against the very small risk of multiple failures leading to supply voltage appearing on the BNC socket, the spears are desirably mounted on the circuit board in such a way that they will be detached by fracture of the mounting before being appreciably bent, resulting in a clear open circuit with negligible risk that failure of both probes could result in the primary and secondary sides of the transformer being connected together without being earthed.

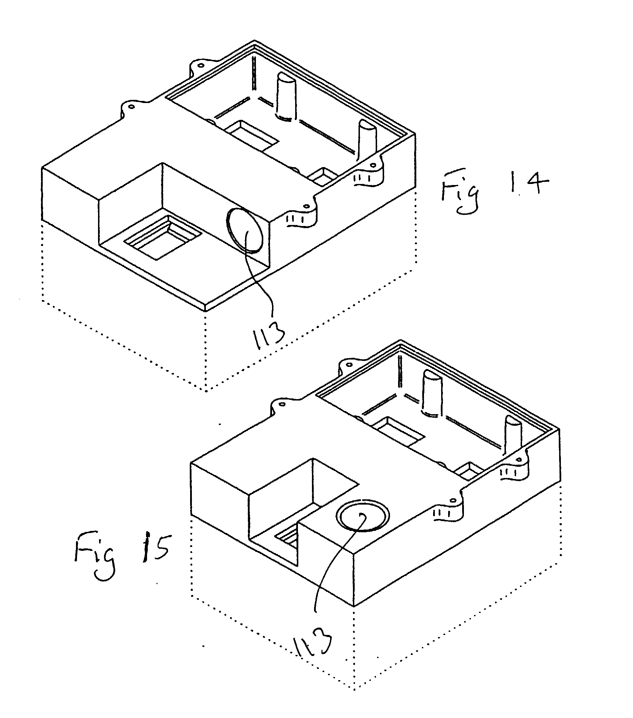

Figures 14-17 illustrate simple design alternatives, varying in shape and/or in the position of the communications access aperture 113.

The above embodiments are given by way of example only and further modifications will be apparent to those skilled in the art.

## Claims

1. An access cover for a consumer cut-out which cover includes a connector suitable for making an electrical connection with a conductor within the cut-out to carry signals to/from that conductor from/to a signal processing circuit.

2. A cover according to claim 1 wherein the cover is an insulating cover plate shaped and dimensioned to fit a company fuse base, apertured to admit connecting prongs of a mating fuse holder, and further supporting a communications connecting point and a circuit providing a high-frequency signal path from a terminal block of the fuse base to one pole of the communications connecting point but substantially no low-frequency connection between those points and connecting the other pole of the communications connecting point to an earth and/or neutral terminal block present in the fuse base.

3. A cover according to claim 1 or claim 2 in which the cover includes two connectors each of which is suitable for making a connection to a respective conductor within the cut-out.

4. A cover according to any of the above claims wherein at least one of the connectors is arranged to make contact with a conductor automatically and without direct intervention of an installer upon application of the access cover to a base unit.

5. A cover according to claim 4 including a connection element which in use comes into contact with a conductor upon application of the access cover.

6. A cover according to claim 5 wherein the connection element is provided in combination with a resilient biasing means which cause the connection element to be urged into contact with the conductor.

7. A cover according to claim 6 wherein the connection element includes an elongate metal contact pin, a shaft portion of which carries a helical spring which constitutes the resilient biasing means.

8. A cover according to any one of the above claims wherein the connections to the respective terminal blocks are made by spring-loaded contacts bearing on them so that contact is made simply by screwing or otherwise securing the device in place of the existing cover plate.

9. A cover according to any one of the above claims wherein the circuit for providing the required signal path and mains-frequency isolation comprises a capacitor in series with the primary side of a ferrite-cored high-frequency isolating transformer between the fuse terminal block and earth, the secondary side of the transformer being connected between the communications connecting point and earth.

10. A cover according to claim 9 wherein the primary and secondary sides of the isolating transformer are connected to the earth (or combined neutral and earth) terminal block of the fuse base independently of each other as an additional precaution against the risk of mains voltage appearing on the communications connecting point.

11. A cover according to any of the above claims including a blanking plate which can be secured in position to block access to the communications connecting point, and which serves in a different orientation to secure a mating connecting device for a communication lead.

12. A consumer cut-out having an access cover according to any of the above claims.

13. A method of making a telecommunication signal connection to a mains power supply wherein an access cover is removed from a consumer cut-out and is substituted by an access cover embodying the first aspect of the invention.

14. A cover according to any one embodiment herein described with reference to the accompanying drawings.
